(19) Europäisches Patentamt
European Patent Office
Office européen des brevets

(11) **EP 2 880 410 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(51) Int Cl.:
**G01K 7/20** *(2006.01)*    **G01K 15/00** *(2006.01)*

(21) Anmeldenummer: **13739438.3**

(86) Internationale Anmeldenummer:
**PCT/EP2013/065394**

(22) Anmeldetag: **22.07.2013**

(87) Internationale Veröffentlichungsnummer:
**WO 2014/019877 (06.02.2014 Gazette 2014/06)**

(54) **MEHRLEITERMESSVORRICHTUNG ZUM ERFASSEN EINES FEHLERHAFTEN, TEMPERATURABHÄNGIGEN WIDERSTANDSSENSORS**

MULTIWIRE MEASURING DEVICE FOR DETECTING A DEFECTIVE, TEMPERATURE-DEPENDENT RESISTANCE SENSOR

SYSTÈME DE MESURE À PLUSIEURS FILS SERVANT À DÉTECTER UN CAPTEUR DE RÉSISTANCE DÉPENDANT DE LA TEMPÉRATURE DÉFAILLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2012 DE 102012107090**

(43) Veröffentlichungstag der Anmeldung:
**10.06.2015 Patentblatt 2015/24**

(73) Patentinhaber: **Phoenix Contact GmbH & Co. KG 32825 Blomberg (DE)**

(72) Erfinder: **ZINK, Fabian 32756 Detmold (DE)**

(74) Vertreter: **Blumbach Zinngrebe Patentanwälte Alexandrastrasse 5 65187 Wiesbaden (DE)**

(56) Entgegenhaltungen:
**WO-A1-99/05480      DE-A1- 3 022 942
DE-A1-102004 035 014**

**Beschreibung**

Die Erfindung betrifft eine Mehrleitermessvorrichtung, mit welcher ein fehlerhafter, temperaturanhängiger Widerstandssensor erfasst werden kann.

In der Prozesstechnik sollen Messwerte, wie zum Beispiel Temperaturmesswerte so ermittelt und umgeformt werden, dass sie die Ansprüche nach der EN 61508 oder der EN 13849 erfüllen. Bei der Temperaturmessung werden heutzutage häufig Platin-Widerstandssensoren eingesetzt, deren ohmscher Widerstand sich mit ändernder Temperatur ebenfalls ändert.

Bekannt ist, bei der Messung von elektrischen Widerständen vorzugsweise eine Zwei-, Drei- oder Vierleitermessung durchzuführen. Eine Vierleitermessung wird insbesondere dann durchgeführt, wenn Leitungs- und Anschlusswiderstände die Messung verfälschen können.

Häufig ist es schwierig, einen fehlerhaften, temperaturabhängigen Widerstandssensor zu erkennen. Um fehlerhafte temperaturabhängige Widerstandssensoren erkennen zu können, werden zum Beispiel in redundanter Weise die Messergebnisse zweier gleicher Platinwiderstandsfühler ausgewertet, indem die beiden gemessenen Temperaturen verglichen werden. Eine solche bekannte Maßnahme wird in der DE 20 2004 021 438 U1 erwähnt. Bei der bekannten redundanten Auswertung wird der Widerstand jedes Widerstandsfühlers separat mit einer Mehrleitermessung ermittelt, so dass für einen Satz von zwei Widerstandsfühlern ein doppelter Verdrahtungsaufwand erforderlich ist.

Aus der DE 20 2004 021 438 U1 ist zudem eine Messanordnung bekannt, bei der zwei parallel geschaltete temperaturabhängige Widerstandssensoren, die jeweils nur zwei Anschlüsse aufweisen, über vier Anschlussleitungen an vier Anschlussklemmen einer Messdatenverarbeitung angeschlossen sind. Zudem sind zwei zuschaltbare Stromquellen vorgesehen. Die Messdatenverarbeitung kann in Abhängigkeit von erfassten Spannungsabfällen über den Widerstandssensoren und von erfassten Strömen fehlerhafte Widerstandssensoren erkennen.

Aus der DE 10 2005 029 045 A1 ist eine Vorrichtung zur Bestimmung und/oder Überwachung der Temperatur bekannt, bei der ein erster Temperatursensor über mindestens 3 Leitungen und ein zweiter Temperatursensor über mindesten 2 Leitungen mit einem Messumformer verbunden sind. Hierbei sind eine Leitung des ersten Temperatursensors und eine Leitung des zweiten Temperatursensors mit einer gemeinsamen Klemme des Messumformers verbunden.

Aus der WO99/05480 A1 ist ein Coriolis-Durchflussmesser bekannt, welcher zwei Temperatursensoren aufweist, die an verschiedenen Orten angeordnet sind, um Temperaturen an zwei Orten messen zu können. Ferner ist eine umschaltbare Spannungsquelle vorgesehen, die benötigt wird, um einen Kabelwiderstand zu messen, so dass eine Kompensation der Kabelwiderstände möglich ist. Dies wird dadurch erreicht, dass ein Temperatursensor periodisch aus der Reihenschaltung der beiden Temperatursensoren geschaltet wird.

Aus der DE 30 22 942 A1 ist ein einziges Widerstandsthermometer bekannt, welches zwei verschiedene Widerstandsmaterialien als umschaltbare Messelemente in einer Messeinheit aufweist.

Der vorliegenden Erfindung liegt die Aufgabe zugrunde, eine Mehrleitermessvorrichtung zum Erfassen eines fehlerhaften, temperaturabhängigen Widerstandssensors zu schaffen, die mit einem geringeren Verdrahtungsaufwand als bisher auskommt und eine automatische Messung von mehreren Widerstandssensoren ermöglicht.

Das technische Problem wird jeweils mit den Merkmalen der unabhängigen Ansprüche 1, 2 und 3 gelöst.

Die Erfindung wird anhand von mehreren Ausführungsbeispielen in Verbindung mit den beiliegenden Zeichnungen näher erläutert. Es zeigen:

Fig. 1    eine Mehrleitermessvorrichtung mit drei Anschlussleitungen und
Fig. 2    eine Mehrleitermessvorrichtung mit 5 Anschlussklemmen.

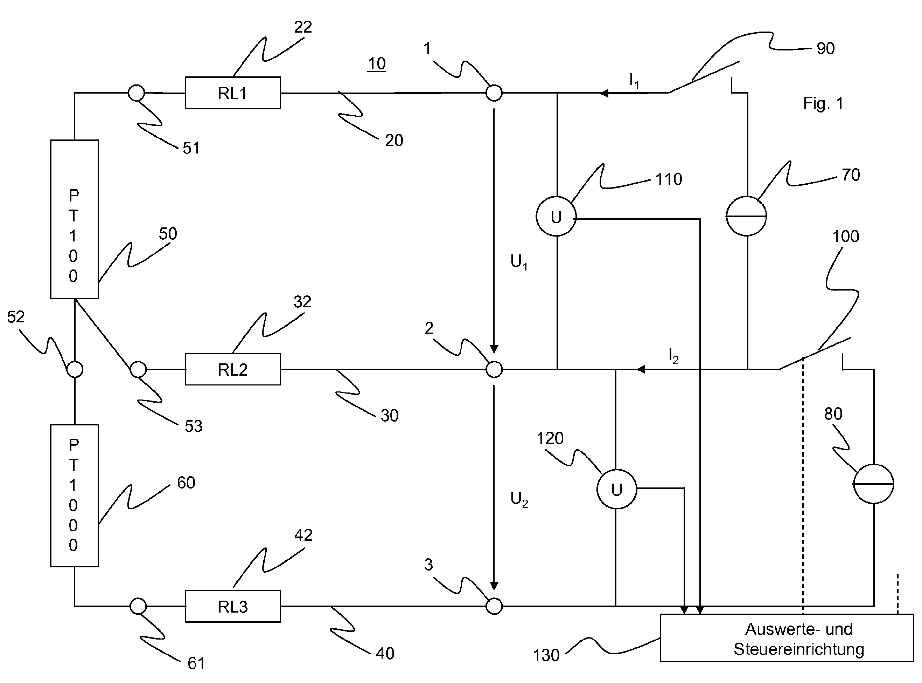

In Fig. 1 ist eine beispielhafte Mehrleitermessvorrichtung 10 mit drei Anschlussklemmen 1, 2 und 3 dargestellt, an die jeweils eine Anschlussleitung 20, 30 bzw. 40 angeschlossen sind. Die Mehrleitermessvorrichtung 10 kann deshalb auch als Dreileiter-Messvorrichtung bezeichnet werden. Die Anschlussleitung 20 besitzt einen Leitungswiderstand RL1, der mit 22 gekennzeichnet ist. In ähnlicher Weise weist die Anschlussleitung 30 einen Leitungswiderstand RL2, der mit 32 gekennzeichnet ist, und die Anschlussleitung 40 einen Leitungswiderstand RL3 auf der mit 42 gekennzeichnet ist. Es ist vorteilhaft, wenn die Leitungswiderstände 22, 32 und 42 gleich, zumindest im Wesentlichen gleich sind.

An die drei Anschlussleitungen 20, 30 und 40 sind zwei elektrisch in Reihe miteinander verbundene, temperaturabhängige Widerstandssensoren 50 und 60 angeschlossen. Bei den temperaturabhängigen Widerstandssensoren 50 und 60 kann es sich um Pt (Platin)-Sensoren handeln. Im vorliegenden Beispiel handelt es sich beim temperaturabhängigen Widerstandssensor 50 um einen PT100 und bei dem temperaturabhängigen Widerstandssensor 60 um einen PT1000. Das bedeutet, dass sich die elektrischen Widerstände der beiden Widerstandssensoren 50 und 60 um den Faktor 10 unterscheiden. Der Platin-Sensor 50 weist drei Anschlüsse 51, 52 und 53 auf, und zwar einen Eingangsanschluss 51, der mit der Anschlussleitung 20 verbunden ist, einen ersten Ausgangsanschluss 52, der mit einem Eingangsanschluss des Platin-Sensors 60 verbunden ist, und einen zweiten Ausgangsanschluss 53, der mit der Anschlussleitung 30 verbunden ist. Der Ausgangsanschluss 61 des Platin-Sensors 60 ist mit der Anschlussleitung 40 verbunden.

An die Anschlussklemmen 1 und 2 ist eine erste ansteuerbare Stromerzeugungseinrichtung 70 angeschlossen, die beispielsweise über einen Schalter 90 ein- oder ausschaltbar ist, d. h. an die Anschlussklemmen 1 und 2 angeschlossen oder von den Anschlussklemmen getrennt werden kann. Die Stromerzeugungseinrichtung 70 ist vorzugsweise eine Stromquelle, welche zum Beispiel einen konstanten Strom $I_1$ liefert. Anstelle einer Stromquelle könnte auch eine Spannungsquelle verwendet werden. Zwischen den Anschlussklemmen 1 und 2 ist ferner eine ansteuerbare Spannungsmesseinrichtung 110 geschaltet, welche die an den Anschlussklemmen 1 und 2 anliegende Spannung $U_1$ messen kann.

An die Anschlussklemmen 2 und 3 ist eine zweite ansteuerbare Stromerzeugungseinrichtung 80 angeschlossen, die beispielsweise über einen Schalter 100 ein- oder ausschaltbar ist, d. h. an die Anschlussklemmen 1 und 2 angeschlossen oder von den Anschlussklemmen getrennt werden kann. Die Stromerzeugungseinrichtung 80 ist vorzugsweise eine Stromquelle, welche zum Beispiel einen konstanten Strom $I_2$ liefert. Anstelle einer Stromquelle könnte auch eine Spannungsquelle verwendet werden. Zwischen den Anschlussklemmen 2 und 3 ist ferner eine ansteuerbare Spannungsmesseinrichtung 120 geschaltet, welche die an den Anschlussklemmen 2 und 3 anliegende Spannung $U_2$ messen kann.

Das Ausgangssignal der Spannungsmesseinrichtung 110 und das Ausgangssignal der Spannungsmesseinrichtung 120 werden einer Auswerte- und Steuereinrichtung 130 zugeführt. Bei einer vorteilhaften Ausführungsform fordert die Auswerte- und Steuereinrichtung (130 die gemessenen Spannungen je nach Bedarf an. Denkbar ist auch, dass die Auswerte- und Steuereinrichtung 130 die Spannungsmesseinrichtungen gezielt aktivieren oder deaktivieren kann. Die Spannungsmesseinrichtungen 110 und 120 können als Messumformer ausgebildet oder Komponenten eines Messumformers sein, welcher jeweils ein analoges Eingangssignal in ein digitales Ausgangssignal umwandelt und zur Auswerte- und Steuereinrichtung 130 überträgt. Zudem kennt die Auswerte- und Steuereinrichtung 130 die von den Stromerzeugungseinrichtungen 70 und 80 gelieferten Gleichströme $I_1$ und $I_2$.

Die Auswerte- und Steuereinrichtung 130 ist ebenfalls mit den Schaltern 90 und 100 verbunden. Sie ist dazu ausgebildet, die beiden Schalter 90 und 100 abwechselnd zu öffnen oder zu schließen. Mit anderen Worten ist immer ein Schalter geöffnet, während der andere Schalte geschlossen ist. Angemerkt sei an dieser Stelle, dass die Auswerte- und Steuereinrichtung 130 auf einer gemeinsamen Platine implementiert und in einem Gehäuse angeordnet sein kann. Alternativ kann die Auswerte- und Steuereinrichtung 130 auch als separate Baugruppen ausgeführt sein.

Bei einer bevorzugten Ausführungsform sind die Anschlussklemmen 1, 2 und 3, die Spannungsmesseinrichtungen 110, 120, die beiden Stromerzeugungseinrichtungen 70 und 80 und die Auswerte- und Steuereinrichtung 130 an bzw. in einem Gehäuse untergebracht. Die beiden zu prüfenden temperaturabhängigen Widerstandssensoren 50 und 60 werden dann vom Kunden extern an die Klemmen 1, 2 und 3 angeschlossen.

Mit der in Fig. 1 gezeigten Mehrleitermessvorrichtung 10 kann ein fehlerhafter, temperaturabhängiger Widerstandssensor mit Hilfe einer redundanten Messung von elektrischen Widerständen und deren zentraler Auswertung automatisch ermittelt werden. Gegenüber einer herkömmlichen redundanten Zweileitermessung, bei der 2*2 Anschlussleitungen erforderlich sind, oder einer herkömmlichen redundanten Dreileitermessung, bei der 2*3 Anschlussleitungen erforderlich sind, sind bei der Mehrleitermessvorrichtung 10 lediglich die drei Anschlussleitungen 20, 30 und 40 anzuschließen.

Nachfolgend wird die Funktionsweise der in Fig. 1 gezeigten Mehrleitermessvorrichtung 10 näher erläutert, bei der die elektrischen Widerstände RPT100 und RPT1000 des Platin-Sensors 50 bzw. des Platin-Sensors 60 jeweils mittels einer Zweileitermessung ermittelt werden.

Angenommen sei, dass der Schalter 90 geschlossen und der Schalter 100 geöffnet ist. Demzufolge fließt ein konstanter Strom $I_1$ durch die Anschlussleitung 20, den Platin-Sensor 50 und die Anschlussleitung 30. Nunmehr wird die Spannung $U_1$ von der Spannungsmesseinrichtung 110 gemessen und zur Auswerte- und Steuereinrichtung 130 übertragen. Aus der gemessenen Spannung $U_1$ und dem bekannten elektrischen Strom $I_1$ ermittelt die Auswerte- und Steuereinrichtung 130 basierend auf der Gleichung $U_1/I_1$=RL1+RPT100+RL2 einen Wert für den elektrischen Widerstand RPT100 des Platin-Sensors 50, der allerdings durch die Leitungswiderstände RL1 und RL2 verfälscht wird.

Anschließend wird unter Steuerung der Auswerte- und Steuereinrichtung 130 der Schalter 90 geöffnet und der Schalter 100 geschlossen. Demzufolge fließt ein konstanter Strom $I_2$ durch die Anschlussleitung 30, den Platin-Sensor 60 und die Anschlussleitung 40. Nunmehr wird die Spannung $U_2$ von der Spannungsmesseinrichtung 120 gemessen und zur Auswerte- und Steuereinrichtung 130 übertragen. Aus der gemessenen Spannung $U_2$ und dem bekannten elektrischen Strom $I_2$ ermittelt die Auswerte- und Steuereinrichtung 130 basierend auf der Gleichung $U_2/I_2$=RL2+RPT1000+RL3 einen Wert für den elektrischen Widerstand RPT1000 des Platin-Sensors 60, der allerdings durch die Leitungswiderstände RL2 und RL3 verfälscht wird. Beide Werte werden nunmehr in der Auswerte- und Steuereinrichtung miteinander verglichen, wobei ein fehlerhafter Platin-Sensor erfasst und gegebenenfalls angezeigt wird, wenn die Differenz beider Werte einen vorgegebenen Grenzwert überschreitet. Nachfolgend wird die Funktionsweise der in Fig. 1 gezeigten Mehrleitermessvorrichtung 10 näher erläutert, bei der die elektrischen Widerstände RPT100 und RPT1000 des Platin-Sensors 50 bzw. des Platin-Sensors 60 jeweils mittels einer Dreileitermessung ermittelt werden.

Angenommen sei, dass die Leiterwiderstände RL1, RL2 und RL3 gleich, zumindest im Wesentlichen gleich sind.

Nunmehr sei angenommen, dass der Schalter 90 geschlossen und der Schalter 100 geöffnet ist. Demzufolge fließt ein konstanter Strom $I_1$ durch die Anschlussleitung 20, den Platin-Sensor 50 und die Anschlussleitung 30. In diesem Moment werden die Spannungen $U_1$ und $U_2$ von der Spannungsmesseinrichtung 110 bzw. 120 gemessen und zur Auswerte- und Steuereinrichtung 130 übertragen. Aus den gemessenen Spannungen $U_1$ und $U_2$ sowie dem bekannten elektrischen Strom $I_1$ ermittelt die Auswerte- und Steuereinrichtung 130 den elektrischen Widerstand RPT100 des Platin-Sensors 50 basierend auf einer Dreileitermessung gemäß folgender Gleichung:

$$\text{RPT100} = (U_1/I_1) - 2*(u_2/I_1) \tag{1}$$

Gleichung (1) basiert auf folgender elektrotechnischen Überlegung:

1) Infolge des durch den Schalter 90 geschlossenen Stromkreises gilt:

$$U_1 = (RL1 + RPT100 + RL2) I_1 \tag{2}$$

bzw.

$$\text{RPT100} = (U_1/I_1) - RL1 - RL2; \tag{3}$$

2) Da bei geöffnetem Schalter 100 kein Strom durch den Platin-Sensor 60 und die Anschlussleitung 40 fließt, gilt: $RL2 = U_2/I_1$.

Mit

$$\text{Mit } RL1 = RL3 = RL2 = U_2/I_1 \text{ folgt aus Gleichung (3) unmittelbar}$$

folgt aus Gleichung (3) unmittelbar Gleichung (1).

Nunmehr sei angenommen, dass unter Steuerung der Auswerte- und Steuereinrichtung 130 Schalter 90 geöffnet und Schalter 100 geschlossen worden ist. Demzufolge fließt ein konstanter Strom $I_2$ durch die Anschlussleitung 30, den Platin-Sensor 60 und die Anschlussleitung 40. In diesem Moment werden die Spannungen $U_1$ und $U_2$ von der Spannungsmesseinrichtung 110 bzw. 120 gemessen und zur Auswerte- und Steuereinrichtung 130 übertragen. Aus den gemessenen Spannungen $U_1$ und $U_2$ sowie dem bekannten elektrischen Strom $I_1$ ermittelt die Auswerte- und Steuereinrichtung 130 den elektrischen Widerstand RPT1000 des Platin-Sensors 60 basierend auf einer Dreileitermessung gemäß folgender Gleichung:

$$\text{RPT1000} = (U_2/I_2) + 2*(u_1/I_2) \tag{4}$$

Gleichung (4) basiert auf folgender elektrotechnischen Überlegung:

1) Infolge des durch den Schalter 100 geschlossenen Stromkreises gilt:

$$U_2 = (RL2 + RPT1000 + RL3) I_2 \tag{5}$$

bzw.

$$\text{RPT1000} = (U_2/I_2) - RL2 - RL3; \tag{6}$$

2) Da bei geöffnetem Schalter 90 kein Strom durch den Platin-Sensor 50 und die Anschlussleitung 20 fließt, gilt: $RL2 = -(U_1/I_2)$.

Mit

$$\text{Mit RL1=RL3=RL2=-}(U_1/I_2) \text{ folgt aus Gleichung (6)}$$

folgt aus Gleichung (6) unmittelbar Gleichung (4).

Die gemäß den Gleichungen (1) und (4) ermittelten elektrischen Widerstände RPT100 und RPT1000 werden anschließend in der Auswerte- und Steuereinrichtung verglichen, um zu erkennen, ob wenigstens einer der Platin-Sensoren 50 und 60 fehlerhaft ist. Ist der elektrische Widerstand RPT1000 um den Faktor 10 größer als der elektrische Widerstand RPT100 sind beide Platin-Sensoren 50 und 60 fehlerfrei. Der Toleranzbereich hinsichtlich der Differenz zwischen RPT1000 und RPT100, innerhalb dessen kein fehlerhafter Platin-Sensor von der Auswerte- und Steuereinrichtung 130 erkannt wird, kann zum Beispiel vom Kunden festgelegt und als Wert in einem Speicher (nicht dargestellt) der Auswerte- und Steuereinrichtung 130 gespeichert werden. In diesem Speicher können auch die Werte der Ströme $I_1$ und $I_2$ abgelegt werden.

Angemerkt sei, dass die Auswerte- und Steuereinrichtung 130, wie oben beschrieben, die elektrischen Widerstände RPT100 und RPT1000 zur Fehlererkennung direkt miteinander vergleichen kann. Denkbar ist aber auch, dass die ermittelten elektrischen Widerstände RPT100 und RPT1000 in der Auswerte- und Steuereinrichtung 130 zunächst in die dazugehörenden Temperaturen umgesetzt und diese anschließend verglichen werden.

Vorteilhafter Weise sind die oben angegebenen Gleichungen in der Auswerte- und Steuereinrichtung 130 abgelegt. In Abhängigkeit von der gewünschten Zwei- oder Dreileitermessung werden die entsprechenden Gleichungen von der Auswerte- und Steuereinrichtung 130 zur Ermittlung der Widerstände der Widerstandssensoren 50 und 60 herangezogen.

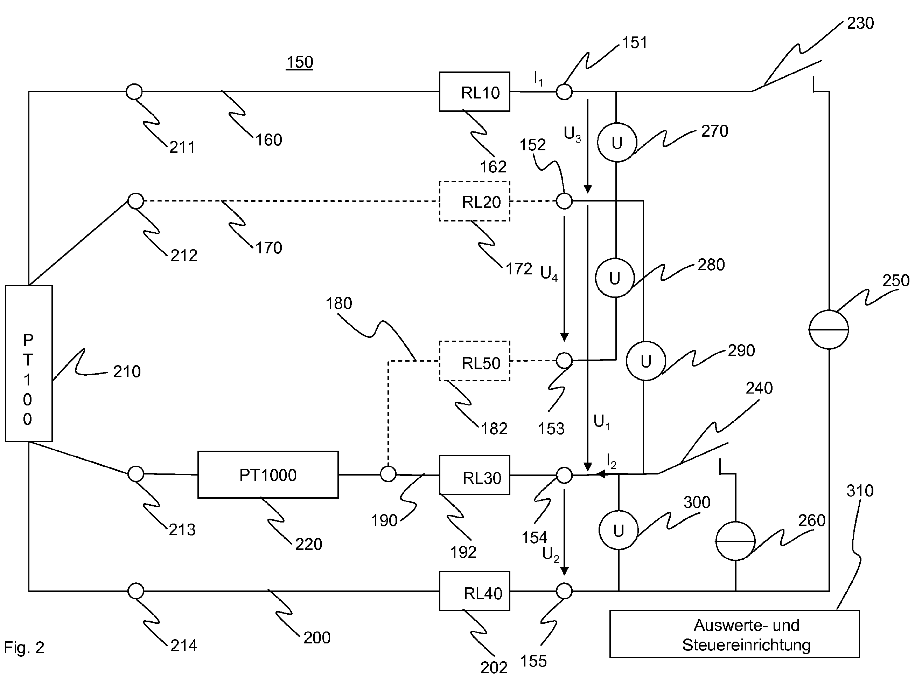

In Fig. 2 ist eine weitere beispielhafte Mehrleitermessvorrichtung 150 mit 5 Anschlussklemmen, 151, 152, 153, 154, und 155 dargestellt, an die jeweils eine Anschlussleitung 160, 170, 180, 190 bzw. 200 angeschlossen werden kann. Die Anschlussleitungen 170 und 180 und die Spannungsmesseinrichtung 280 können bei einer Dreileitermessung, wie weiter unten noch erläutert, entfallen. Die Anschlussleitung 160 besitzt einen Leitungswiderstand RL10, der mit 162 gekennzeichnet ist. Die Anschlussleitung 170 besitzt einen Leitungswiderstand RL20, der mit 172 gekennzeichnet ist. Die Anschlussleitung 180 besitzt einen Leitungswiderstand RL 50, der mit 182 gekennzeichnet ist. Angemerkt sei, dass die Anschlussleitung 180 auch durch einen temperaturabhängigen Widerstandssensor ersetzt werden könnte. Die Anschlussleitung 190 besitzt einen Leitungswiderstand RL30, der mit 192 bezeichnet ist. In ähnlicher Weise besitzt die Anschlussleitung 200 einen Leitungswiderstand RL40, der mit 202 bezeichnet ist. Es ist vorteilhaft, wenn alle Leitungswiderstände gleich, zumindest im Wesentlichen gleich sind.

An die fünf Anschlussleitungen 160, 170, 180, 190 und 200 können zwei elektrisch miteinander verbundene, temperaturabhängige Widerstandssensoren 210 und 220 angeschlossen werden. Angemerkt sei an dieser Stelle, dass es sich bei den Anschlussleitungen 160 bis 200 nicht um separate Leitungen handeln muss. Sie können auch unmittelbar die Anschlussdrähte der Widerstandssensoren 210 und 220 bilden. Bei den temperaturabhängigen Widerstandssensoren 210 und 220 kann es sich um $P_t$ (Platin)- Sensoren handeln. Im vorliegenden Beispiel handelt es sich beim temperaturabhängigen Widerstandssensor 210 um einen PT100 und bei dem temperaturabhängigen Widerstandssensor 220 um einen PT1000. Das bedeutet, dass sich die elektrischen Widerstände der beiden Widerstandssensoren 210 und 220 um den Faktor 10 unterscheiden. Der Platin-Sensor 210 weist vier Anschlüsse 211, 212, 213 und 214 auf, wobei jeweils die Anschlüsse 211 und 212 an einer Seite und die Anschlüsse 213 und 214 an der anderen Seite des Platin-Sensors 210 vorgesehen sind. Die beiden Anschlüsse 211 und 212 sind mit der Anschlussleitung 160 bzw. der Anschlussleitung 170 verbunden, während der Anschluss 213 mit einem Anschluss des Platin-Sensors 220 verbunden ist. Der Anschluss 214 des Platin-Sensors 210 ist mit der Anschlussleitung 200 verbunden. An die Anschlussklemmen 151 und 155 ist eine erste ansteuerbare Stromerzeugungseinrichtung 250 angeschlossen, die beispielsweise über einen Schalter 230 ein- oder ausschaltbar ist, d. h. an die Anschlussklemmen 151 und 155 angeschlossen oder von diesen Anschlussklemmen getrennt werden kann. Die Stromerzeugungseinrichtung 250 ist vorzugsweise eine Stromquelle, welche z. B. einen konstanten Strom $I_1$ liefert. An die Anschlussklemmen 154 und 155 ist eine zweite ansteuerbare Stromerzeugungseinrichtung 260 angeschlossen, die beispielsweise über einen Schalter 240 ein- oder ausschaltbar ist, d. h. an die Anschlussklemmen 154 und 155 angeschlossen oder von diesen Anschlussklemmen getrennt werden kann. Die Stromerzeugungseinrichtung 260 ist vorzugsweise eine Stromquelle, welche z. B. einen konstanten Strom $I_2$ liefert. Zwischen den Anschlussklemmen 151 und 152 kann eine Spannungsmesseinrichtung 270 angeschlossen sein, welche die an den Anschlussklemmen 151 und 152 anliegende Spannung $U_3$ messen kann. Zwischen den Anschlussklemmen 152 und 153 kann eine Spannungsmesseinrichtung 280 angeschlossen sein, welche die an den Anschlussklemmen 152, 153 anliegende Spannung $U_4$ messen kann. Zwischen den Anschlussklemmen 152 und 154 kann eine Spannungsmesseinrichtung 290 angeschlossen sein, welche die an den Anschlussklemmen 152 und 154 anliegende Spannung $U_1$ messen kann. Zwischen den Anschlussklemmen 154 und 155 kann eine Spannungsmesseinrichtung 300 angeschlossen sein, welche die an den Anschlussklemmen 154 und 155 anliegende Spannung $U_2$ messen kann. Die Ausgangssignale der Spannungsmesseinrichtungen 270, 280, 290 und 300 werden einer Auswerte- und Steuereinrichtung 310 zugefügt. Alle Spannungsmesseinrichtungen können als Messumformer ausgebildet sein, welche jeweils ein analoges Eingangssignal in ein digitales Ausgangssignal umwandeln und zur Auswerte- und Steuereinrichtung 310 übertragen können. Zudem kennt die Auswerte- Steuereinrichtung 310 die von dem Stromerzeugungseinrichtungen 250 und 260 gelieferten Gleichströme $I_1$ und $I_2$. Diese Werte können auch in einer (nicht dargestellten) Speichereinrichtung der Auswerte-Steuereinrichtung 310 abgelegt sein.

Die Auswerte- und Steuereinrichtung 310 ist ebenfalls mit den Schaltern 230 und 240 verbunden. Sie ist dazu ausgebildet, die beiden Schalter 230 und 240 abwechselnd zu öffnen oder zu schließen. Mit anderen Worten ist immer ein Schalter geöffnet, während der andere Schalter geschlossen ist. An dieser Stelle sei angemerkt, dass die Auswerte- und Steuereinrichtung 310 auf einer gemeinsamen Platine implementiert und in einem Gehäuse angeordnet sein kann. Alternativ kann die Auswerte- und Steuereinrichtung 310 auch als separate Baugruppe ausgeführt sein. Ferner kann die Auswerte- und Steuereinrichtung 310 dazu ausgebildet sein, in Abhängigkeit von der gewünschten bzw. eingestellten Mehrleitermessung die jeweiligen Spannungsmesseinrichtungen zu aktivieren oder zu deaktivieren.

Bei der in Fig. 2 gezeigten Ausführungsformen können die Anschlussklemmen 151, 152, 153, 154 und 155, die Spannungsmesseinrichtungen 270, 280, 290 und 300, die beiden Stromerzeugungseinrichtungen 250 und 260 sowie die Auswerte- und Steuereinrichtung 310 an- bzw. in einem Gehäuse untergebracht sein. Die beiden zu prüfenden temperaturabhängigen Widerstandssensoren 210 und 220 werden dann vom Kunden extern an die Klemmen 151, 152, 153, 154 und 155 angeschlossen.

Die in Figur 2 gezeigte Mehrleitermessvorrichtung 150 kann einen fehlerhaften, temperaturabhängigen Widerstandssensor mit Hilfe einer automatischen redundanten Messung von elektrischen Widerständen und deren zentraler Auswertung erfassen. Gegenüber einer herkömmlichen redundanten Dreileitermessung, bei der 2*3 Anschlussleitungen erforderlich sind, oder einer herkömmlichen redundanten Vierleitermessung, bei der 2*4 Anschlussleitungen erforderlich sind, sind bei der Mehrleitermessvorrichtung 150 lediglich vier bzw. fünf Anschlussleitungen anzuschließen.

Nachfolgend wird die Funktionsweise der in Fig. 2 gezeigten Mehrleitermessvorrichtung 150 näher erläutert, bei der die elektrischen Widerstände RPT100 und RPT1000 des Platin-Sensors 210 bzw. des Platin-Sensors 220 jeweils mittels einer Vierleitermessung ermittelt werden.

Angenommen sei wiederum, dass die Leiterwiderstände RL10, RL20, RL30, RL40 und RL50, gleich, zumindest im Wesentlichen gleich sind.

Nunmehr sei angenommen, dass der Schalter 230 geschlossen und der Schalter 240 geöffnet ist. Demzufolge fließt ein konstanter Strom $I_1$ durch die Anschlussleitung 160, den Platin-Sensor 210 und die Anschlussleitung 200. Ähnlich einer herkömmlichen Vierleitermessung wird nunmehr die Spannung $U_1$, welche zwischen den Anschlussklemmen 152 und 154 anliegt, von der Spannungsmesseinrichtung 290 gemessen und zur Auswerte- und Steuereinrichtung 310 übertragen. Wegen des hochohmigen inneren Widerstandes der Spannungsmesseinrichtung 290 fließt über die Anschlussleitungen 170 und 190 lediglich ein vernachlässigbarer Strom, sodass die Auswerte- und Steuereinrichtung 310 aus dem bekannten Strom I1 und der gemessenen Spannung $U_1$ den elektrischen Widerstand RPT 100 des Platin-Sensors 210 basierend auf einer

Vierleitermessung sehr präzise gemäß folgender Gleichung ermitteln kann:

$$RPT100 = U_1/I_1 \hspace{4cm} (7)$$

Nunmehr sei angenommen, dass unter Steuerung der Auswerte- und Steuereinrichtung 310 der Schalter 230 geöffnet und der Schalter 240 geschlossen worden ist. Demzufolge fließt ein konstanter Strom $I_2$ durch die Anschlussleitung 190, den Platin-Sensor 220 und die Anschlussleitung 200. Unter Anwendung einer Vierleitermessung wird nunmehr die zwischen den Anschlussklemmen 152 und 153 anliegende Spannung $U_4$ von der Spannungsmesseinrichtung 280 gemessen und zur Auswerte- und Steuereinrichtung 310 übertragen. Da die Anschlussleitungen 170 und 180 im Wesentlichen stromlos sind, kann die Auswerte- und Steuereinrichtung 310 aus dem bekannten Strom $I_2$ und der gemessenen Spannung $U_4$ den elektrischen Widerstand RPT1000 des Platinsensors 220 in sehr guter Näherung gemäß der folgenden Gleichung ermitteln:

$$RPT1000 = U_4/I_2 \hspace{4cm} (8)$$

Die gemäß den Gleichungen (7) und (8) ermittelten elektrischen Widerstände RPT100 und RPT1000 werden anschließend in der Auswerte- und Steuereinrichtung 310 verglichen, um zu erkennen, ob wenigstens einer der Platin-Sensoren 210 und 220 fehlerhaft ist. Ist der elektrische Widerstand RPT1000 um den Faktor 10 größer als der elektrische Widerstand RPT100 sind beide Platin-Sensoren 210 und 220 fehlerfrei. Der Toleranzbereich hinsichtlich der Differenz zwischen RPT1000 und RPT100, innerhalb dessen kein fehlerhafter Platin-Sensor von der Auswerte- und Steuereinrichtung 310 erkannt wird, kann zum Beispiel vom Kunden festgelegt und als Wert in einem Speicher (nicht dargestellt) der Auswerte- und Steuereinrichtung 310 gespeichert werden. In diesem Speicher können auch die Werte der Ströme $I_1$ und $I_2$ abgelegt werden.

Angemerkt sei, dass die Auswerte- und Steuereinrichtung 310, wie oben beschrieben, die elektrischen Widerstände RPT100 und RPT1000 zur Fehlererkennung direkt miteinander vergleichen kann. Denkbar ist aber auch, dass die ermittelten elektrischen Widerstände RPT100 und RPT1000 in der Auswerte- und Steuereinrichtung 310 zunächst in die dazugehörenden Temperaturen umgesetzt und diese anschließend verglichen werden.

Die Mehrleitermessvorrichtung 150 ermöglicht eine automatische Vierleitermessung der beiden Platin-Sensoren 210 und 220, obwohl lediglich fünf Anschlussklemmen bzw. fünf Anschlussleitungen vorhanden sind. Angemerkt sei, dass im vorstehend beschriebenen Fall lediglich die beiden Spannungsmesseinrichtungen 280 und 290 benötigt werden. Die beiden weiteren, dargestellten Spannungsmesseinrichtungen 270 und 300 können beispielsweise von der Auswerte- und Steuereinrichtung 310 deaktiviert werden oder gar nicht vorhanden sein. Denkbar ist auch, dass die Auswerte- und Steuereinrichtung 310 derart programmiert ist, dass sie die von den Spannungsmesseinrichtungen 270 und 300 gelieferten Spannungen nicht auswertet.

Nachfolgend wird die Funktionsweise der in Fig. 2 gezeigten Mehrleitermessvorrichtung 150 näher erläutert, bei der der elektrische Widerstand RPT1000 des Platin-Sensors 220 mittels einer Zweileitermessung und der elektrische Widerstand RPT100 des Platin-Sensors 210 mittels einer Vierleitermessung ermittelt werden kann.

Bei diesem Beispiel werden lediglich die Anschlussklemmen 151, 152, 154, 155 benötigt.

Wiederum sei angenommen, dass alle Leitungswiderstände zumindest im Wesentlichen gleich sind.

Weiterhin sei angenommen, dass der Schalter 230 geöffnet und der Schalter 240 geschlossen ist. Demzufolge fließt ein konstanter Strom $I_2$ durch die Anschlussleitung 190, den Platin-Sensor 220 und die Anschlussleitung 200. Nunmehr wird die Spannung $U_2$, welche zwischen den Anschlussklemmen 154, 155 anliegt, von der Spannungsmesseinrichtung 300 gemessen und zur Auswerte- und Steuereinrichtung 310 übertragen. Unter Anwendung einer Zweileitermessung ermittelt die Auswerte- und Steuereinrichtung 310 aus der gemessenen Spannung $U_2$ und dem bekannten Strom $I_2$ basierend auf der Gleichung $U_2/I_2 = RL30 + RPT1000 + RL40$ einen Wert für den elektrischen Widerstand RPT1000 des Platin-Sensors 220, der allerdings durch die Leitungswiderstände RL30 und RL40 verfälscht wird.

Nunmehr werde automatisch auch der elektrische Widerstand RPT100 des Platin-Sensors 210 unter Anwendung einer Vierleitermessung ermittelt. Hierzu wird der Schalter 230 geschlossen und der Schalter 240 geöffnet. Anschließend misst die Spannungsmesseinrichtung 290 die zwischen den Anschlussklemmen 152 und 154 anliegende Spannung $U_1$ und überträgt diese Spannung zur Auswerte- Steuereinrichtung. Die Auswerte- und Steuereinrichtung 310 ermittelt dann den elektrischen Widerstand RPT 100 des Platin-Sensors 210 gemäß der Gleichung (7):

$$RPT100 = U_1/I_1.$$

Anschließend werden die beiden elektrischen Widerstände RPT100 und RPT1000 verglichen, um wenigstens einen fehlerhaften Platin-Sensor erfassen zu können.

Angemerkt sei, dass die Auswerte- und Steuereinrichtung 310, wie oben beschrieben, die elektrischen Widerstände RPT100 und RPT1000 zur Fehlererkennung direkt miteinander vergleichen kann. Denkbar ist aber auch, dass die ermittelten elektrischen Widerstände RPT100 und RPT1000 in der Auswerte- und Steuereinrichtung 310 zunächst in die dazugehörenden Temperaturen umgesetzt und diese anschließend verglichen werden.

Die beispielhafte Mehrleitermessvorrichtung 150 ermöglicht somit auch eine kombinierte, automatische Anwendung einer Zwei- und Vierleitermessung der beiden Platin-Sensoren 210 und 220, obwohl lediglich vier Anschlussklemmen bzw. vier Anschlussleitungen vorhanden sind.

Beim vorstehend beschriebenen Fall werden lediglich die beiden Spannungsmesseinrichtungen 290 und 300 benötigt werden. Die beiden weiteren, dargestellten Spannungsmesseinrichtungen 270 und 280 können beispielsweise von der Auswerte- und Steuereinrichtung 310 deaktiviert werden oder gar nicht vorhanden sein. Denkbar ist auch, dass die Auswerte- und Steuereinrichtung 310 derart programmiert ist, dass sie die von den Spannungsmesseinrichtungen 270 und 280 gelieferten Spannungen in diesem Fall nicht auswertet.

Nachfolgend wird die Funktionsweise der in Fig. 2 gezeigten Mehrleitermessvorrichtung 150 näher erläutert, bei der die elektrischen Widerstände RPT100 und RPT1000 des Platin-Sensors 210 bzw. des Platin-Sensors 220 jeweils mittels einer Dreileitermessung ermittelt werden.

Hierzu werden die Anschlussklemmen 152 und 153 und die Spannungsmesseinrichtung 280 zum Messen einer Spannung $U_4$ nicht benötigt.

Angenommen sei wiederum, dass die Leiterwiderstände RL10, RL30 und RL40 gleich, zumindest im Wesentlichen gleich sind.

Nunmehr sei angenommen, dass der Schalter 230 geschlossen und der Schalter 240 geöffnet ist. Demzufolge fließt ein

konstanter Strom $I_1$ durch die Anschlussleitung 160, den Platin-Sensor 210 und die Anschlussleitung 200. Jetzt können die Spannung $U_1$ von der Spannungsmesseinrichtung 290, die Spannung $U_2$ von der Spannungsmesseinrichtung 300 und die Spannung $U_3$ von der Spannungsmesseinrichtung 270 gemessen und zur Auswerte- und Steuereinrichtung 310 übertragen werden. Aus den gemessenen Spannungen $U_1$, $U_2$, $U_3$ und dem bekannten elektrischen Strom $I_1$ ermittelt die Auswerte- und Steuereinrichtung 310 einen Wert für den elektrischen Widerstand RPT100 des Platin-Sensors 210 gemäß der Gleichung:

$$\texttt{RPT100 = (U}_3\texttt{+U}_1\texttt{-U}_2\texttt{)/I}_1\texttt{.} \qquad\qquad (9)$$

Gleichung (9) ergibt sich aus folgenden Überlegungen:

$$\texttt{RL10+RPT100+RL40 = (U}_3\texttt{+U}_{1\texttt{+}}\texttt{U}_2\texttt{)/I}_1 \texttt{ mit RL10=RL40=U}_2\texttt{/I}_1\texttt{.}$$

Nunmehr sei angenommen, dass unter Steuerung der Auswerte- und Steuereinrichtung 310 der Schalter 230 geöffnet und der Schalter 240 geschlossen worden ist. Demzufolge fließt ein konstanter Strom $I_2$ durch die Anschlussleitung 190, den Platin-Sensor 220 und die Anschlussleitung 200.

Wiederum kann die Spannung $U_1$ von der Spannungsmesseinrichtung 290, die Spannung $U_2$ von der Spannungsmesseinrichtung 300 und die Spannung $U_3$ von der Spannungsmesseinrichtung 270 gemessen und zur Auswerte- und Steuereinrichtung 310 übertragen werden. Aus den gemessenen Spannungen $U_1$, $U_2$, $U_3$ und dem bekannten elektrischen Strom $I_2$ ermittelt die Auswerte- und Steuereinrichtung 310 einen

Wert für den elektrischen Widerstand RPT1000 des Platin-Sensors 220 gemäß der Gleichung:

$$\texttt{RPT1000 = 2(U}_3\texttt{+U}_1\texttt{)/I}_2\texttt{-U}_2\texttt{/I}_2 \qquad\qquad (10)$$

Gleichung (10) ergibt sich aus folgenden Überlegungen:

$$\texttt{U}_2\texttt{/I}_2 \texttt{ = 2RL40+RPT1000 mit RL40 = (U}_2\texttt{-U}_1\texttt{-U}_3\texttt{)/I}_2\texttt{.}$$

Die gemäß den Gleichungen (9) und (10) ermittelten elektrischen Widerstände RPT100 und RPT1000 werden anschließend in der Auswerte- und Steuereinrichtung 310 verglichen, um zu erkennen, ob wenigstens einer der Platin-Sensoren 210 und 220 fehlerhaft ist. Ist der elektrische Widerstand RPT1000 um den Faktor 10 größer als der elektrische Widerstand RPT100 sind beide Platin-Sensoren 210 und 220 fehlerfrei. Der Toleranzbereich hinsichtlich der Differenz zwischen RPT1000 und RPT100, innerhalb dessen kein fehlerhafter Platin-Sensor von der Auswerte- und Steuereinrichtung 310 erkannt wird, kann zum Beispiel vom Kunden festgelegt und als Wert in einem Speicher (nicht dargestellt) der Auswerte- und Steuereinrichtung 310 gespeichert werden. In diesen Speicher können auch die Werte der Ströme $I_1$ und $I_2$ abgelegt werden.

Angemerkt sei, dass die Auswerte- und Steuereinrichtung 310, wie oben beschrieben, die elektrischen Widerstände RPT100 und RPT1000 zur Fehlererkennung direkt miteinander vergleichen kann. Denkbar ist aber auch, dass die ermittelten elektrischen Widerstände RPT100 und RPT1000 in der Auswerte- und Steuereinrichtung 310 zunächst in die dazugehörenden Temperaturen umgesetzt und diese anschließend verglichen werden.

Die Mehrleitermessvorrichtung 150 ermöglicht somit eine automatische Dreileitermessung der beiden Platin-Sensoren 210 und 220. Angemerkt sei, dass im vorstehend beschriebenen Fall lediglich die Spannungsmesseinrichtungen 270, 290 und 300 benötigt werden. Die Spannungsmesseinrichtung 280 kann beispielsweise von der Auswerte- und Steuereinrichtung 310 deaktiviert werden oder gar nicht vorhanden sein. Denkbar ist auch, dass die Auswerte- und Steuereinrichtung 310 derart programmiert ist, dass sie die von der Spannungsmesseinrichtung 280 gelieferte Spannung nicht auswertet.

Vorteilhafter Weise sind die oben angegebenen Gleichungen in der Auswerte- und Steuereinrichtung 310 abgelegt. In Abhängigkeit von der gewünschten bzw. eingestellten Zwei-, Drei- oder Vierleitermessung werden die entsprechenden Gleichungen von der Auswerte- und Steuereinrichtung 310 zur Ermittlung der Widerstände der Widerstandssensoren 210 und 220 herangezogen.

Ein Kerngedanke der Erfindung kann demnach darin gesehen werden eine Mehrleitermessvorrichtung zu schaffen, die wenigstens zwei wechselweise ansteuerbare Stromerzeugungseinrichtungen, wenigstens zwei Spannungsmesseinrichtungen und wenigstens drei Anschlussklemmen, vorzugsweise drei, vier oder fünf Anschlussklemmen aufweist, an die wenigstens zwei elektrisch miteinander verbundene temperaturabhängige Widerstandssensoren angeschlossen werden können. Diese Mehrleitermessvorrichtung weist zudem eine Auswerteeinrichtung auf, die dazu ausgebildet ist, die elektrischen Widerstände der Widerstandssensoren automatisch und unter Anwendung jeder möglichen Kombination aus einer Zwei-, Drei- und Vierleitermessung zu ermitteln.

Vorteilhafter Weise ist eine Mehrleitermessvorrichtung zum Erkennen eines fehlerhaften, temperaturabhängigen Widerstandssensors vorgesehen, welche wenigstens drei Anschlussklemmen aufweist, die mit zwei wechselweise einschaltbaren Stromerzeugungseinrichtungen und wenigstens zwei Spannungsmesseinrichtungen verbunden sind. Die Stromerzeugungseinrichtungen liefern jeweils einen vorbestimmten, vorzugsweise konstanten Strom. Die wenigstens drei Anschlussklemmen können über jeweils eine Anschlussleitung mit wenigstens zwei, elektrisch miteinander verbundenen, temperaturabhängigen Widerstandssensoren verbunden werden. Ferner ist eine Auswerteeinrichtung vorgesehen, die dazu ausgebildet ist, aus den vorbestimmten Strömen und den von den Spannungsmesseinrichtungen messbaren Spannungen die elektrischen Widerstände von wenigstens zwei temperaturabhängigen Widerstandssensoren zu ermitteln und in Abhängigkeit von den ermittelten elektrischen Widerständen einen fehlerhaften temperaturabhängigen Widerstandssensor zu erkennen.

Vorzugsweise werden hierzu die ermittelten Widerstände der wenigstens zwei temperaturabhängigen Widerstandssensoren direkt miteinander verglichen oder die ermittelten elektrischen Widerstände in die dazugehörenden Temperaturen umgerechnet und dann verglichen.

Eine vorteilhafte Weiterbildung sieht vor, dass die Auswerteeinrichtung dazu ausgebildet ist, die elektrischen Widerstände der wenigstens zwei temperaturabhängigen Widerstandssensoren mittels einer Zwei- oder DreiLeitermessung zu ermitteln. Die Auswerteeinrichtung kann dazu ausgebildet sein, unter Ansprechen auf eine, beispielsweise von einer Bedienperson eingegebene Modusinformation automatisch eine Zwei- oder Dreileitermessung zu steuern.

Um den Einfluss von Leitungs- und Anschlusswiderständen bei der Messung zu reduzieren, sind vorzugsweise vier Anschlussklemmen vorgesehen, die jeweils über eine Anschlussleitung mit den wenigstens zwei temperaturabhängigen Widerstandssensoren verbindbar sind, wobei die Auswertereinrichtung dazu ausgebildet ist, den elektrischen Widerstand des einen temperaturabhängigen Widerstandssensors mittels einer Vierleitermessung und den elektrischen Widerstand des anderen temperaturabhängigen Widerstandssensors mittels einer Zweileitermessung zu ermitteln.

Alternativ sind wiederum vier Anschlussklemmen vorgesehen, die jeweils über eine Anschlussleitung mit den wenigstens zwei temperaturabhängigen Widerstandssensoren verbindbar sind, wobei die Auswerteeinrichtung dazu ausgebildet ist, die elektrischen Widerstände der temperaturabhängigen Widerstandssensoren jeweils mit einer Dreileitermessung zu ermitteln.

Gemäß einer weiteren vorteilhaften Ausgestaltung sind fünf Anschlussklemmen vorgesehen, die jeweils über eine Anschlussleitung mit den wenigstens zwei temperaturabhängigen Widerstandssensoren verbindbar sind, wobei die Auswerteeinrichtung dazu ausgebildet ist, die elektrischen Widerstände der temperaturabhängigen Widerstandssensoren mittels einer Vierleitermessung zu ermitteln.

Vorzugsweise sind die temperaturabhängigen Widerstandssensoren thermisch gekoppelt und in einem Gehäuse angeordnet.

Die elektrischen Widerstände der temperaturabhängigen Widerstandssensoren können gleich sein.

Die elektrischen Widerstände der temperaturabhängigen Widerstandssensoren können alternativ auch in einem vorbestimmten Verhältnis zueinander stehen.

Vorzugsweise handelt es sich bei den temperaturabhängigen Widerstandssensoren um Platin-Sensoren.

Weiterhin kann eine Steuereinrichtung zum Ansteuern der Stromerzeugungseinrichtungen und/oder der Spannungsmesseinrichtungen vorgesehen sein. Auswerteeinrichtung und Steuereinrichtung können getrennt oder integriert implementiert sein.

**Patentansprüche**

1. Mehrleitermessvorrichtung (10; 150) zum Erfassen eines fehlerhaften, temperaturabhängigen Widerstandssensors mit

   drei Anschlussklemmen (1, 2, 3; 151, 154, 155), die mit zwei wechselweise ansteuerbaren Stromerzeugungseinrichtungen (70, 80; 250, 260), welche jeweils einen vorbestimmten Strom liefern, und mit wenigstens zwei Spannungsmesseinrichtungen (110, 120; 270, 290, 300) verbunden sind,
   wenigstens zwei in Reihe geschalteten temperaturabhängigen Widerstandssensoren (50, 60; 210, 220), welche thermisch gekoppelt und in einem Gehäuse angeordnet sind, wobei der eine temperaturabhängige Widerstandssensor (50; 210) drei Anschlüsse (51, 52, 53; 211, 213, 214) und der andere temperaturabhängige Widerstandssensor (60; 220) zwei Anschlüsse (61, 62) aufweist,

wobei zwei der drei Anschlussklemmen (1, 2; 151, 155)) über jeweils eine Anschlussleitung (20, 30; 160, 200) mit dem einen temperaturabhängigen Widerstandssensor (50; 210) verbindbar sind und die dritte Anschlussklemme (3; 154) über eine weitere Anschlussleitung (40; 190) mit dem anderen temperaturabhängigen Widerstandssensor (60; 220) verbindbar ist, und mit

einer Auswerte- und Steuereinrichtung (130; 310), welche dazu ausgebildet ist, die zwei Stromerzeugungseinrichtungen (70, 80; 240, 250) anzusteuern, und welche ferner dazu ausgebildet ist, aus den vorbestimmten Strömen und den von den Spannungsmesseinrichtungen (110, 120; 270, 290, 300) messbaren Spannungen die elektrischen Widerstände (RPT100, RPT1000) der wenigstens zwei Widerstandssensoren (50, 60; 210, 220)) jeweils mittels einer Zweileitermessung oder jeweils mittels einer Dreileitermessung zu ermitteln und in Abhängigkeit von den ermittelten elektrischen Widerständen einen fehlerhaften temperaturabhängigen Widerstandssensor zu erfassen.

2. Mehrleitermessvorrichtung (150) zum Erfassen eines fehlerhaften, temperaturabhängigen Widerstandssensors mit vier Anschlussklemmen (151, 152, 154, 155), die in vorbestimmter Weise mit zwei wechselweise ansteuerbaren Stromerzeugungseinrichtungen (250, 260), die jeweils einen vorbestimmten Strom liefern, und mit zwei Spannungsmesseinrichtungen (290, 300) verbunden sind,

wenigstens zwei in Reihe geschalteten temperaturabhängigen Widerstandssensoren (210, 220), thermisch gekoppelt und in einem Gehäuse angeordnet sind, wobei der eine temperaturabhängige Widerstandssensor (210) vier Anschlüsse (211, 212, 213, 214) und der andere temperaturabhängige Widerstandssensor (220) zwei Anschlüsse aufweist, wobei

drei der vier Anschlussklemmen (151, 152, 155) über jeweils eine Anschlussleitung (160, 170, 200) mit dem einen temperaturabhängigen Widerstandssensor (210) verbindbar sind und die vierte Anschlussklemme (154) über eine weitere Anschlussleitung (190) mit dem anderen temperaturabhängigen Widerstandssensor (220) verbindbar ist, und mit

einer Auswerte- und Steuereinrichtung (310), welche dazu ausgebildet ist, die zwei Stromerzeugungseinrichtungen (240, 250) anzusteuern, und welche ferner dazu ausgebildet ist, aus den vorbestimmten Strömen und den von den Spannungsmesseinrichtungen (290, 300) messbaren Spannungen den elektrischen Widerstand des einen temperaturabhängigen Widerstandssensors (210) mittels einer Vierleitermessung und den elektrischen Widerstand des anderen temperaturabhängigen Widerstandssensors (220) mittels einer Zweileitermessung zu ermitteln und in Abhängigkeit von den ermittelten elektrischen Widerständen einen fehlerhaften temperaturabhängigen Widerstandssensor zu erfassen, oder

aus den vorbestimmten Strömen und den von den Spannungsmesseinrichtungen (290, 300) messbaren Spannungen die elektrischen Widerstände der temperaturabhängigen Widerstandssensoren (210, 220) jeweils mittels einer Dreileitermessung zu ermitteln und in Abhängigkeit von den ermittelten elektrischen Widerständen einen fehlerhaften temperaturabhängigen Widerstandssensor zu erfassen.

3. Mehrleitermessvorrichtung (150) zum Erfassen eines fehlerhaften, temperaturabhängigen Widerstandssensors mit fünf Anschlussklemmen (151-155), die in vorbestimmter Weise mit zwei wechselweise ansteuerbaren Stromerzeugungseinrichtungen (250, 260), die jeweils einen vorbestimmten Strom liefern, und mit zwei Spannungsmesseinrichtungen (280, 290) verbunden sind, wenigstens zwei in Reihe geschalteten temperaturabhängigen Widerstandssensoren (210, 220), welche thermisch gekoppelt und in einem Gehäuse angeordnet sind, wobei der eine temperaturabhängige Widerstandssensor (210) vier Anschlüsse (211, 212, 213, 214) und der andere temperaturabhängige Widerstandssensor (220) zwei Anschlüsse aufweist, wobei drei der fünf Anschlussklemmen (151, 152, 155) über jeweils eine Anschlussleitung (160, 170, 200) mit dem einen temperaturabhängigen Widerstandssensor (210) und die beiden anderen Anschlussklemmen (153, 154) jeweils über eine weitere Anschlussleitung (180, 190) mit einem Anschluss des anderen temperaturabhängigen Widerstandssensors (220) verbindbar sind, und mit einer Auswerte- und Steuereinrichtung (310), welche dazu ausgebildet ist, die zwei Stromerzeugungseinrichtungen (250, 260) anzusteuern, und welche ferner dazu ausgebildet ist, aus den vorbestimmten Strömen und den von den Spannungsmesseinrichtungen (280, 290) messbaren Spannungen die elektrischen Widerstände der temperaturabhängigen Widerstandssensoren (210, 220) jeweils mittels einer Vierleitermessung zu ermitteln und in Abhängigkeit von den ermittelten elektrischen Widerständen einen fehlerhaften temperaturabhängigen Widerstandssensor zu erfassen.

4. Mehrleitermessvorrichtung nach einem der Ansprüche 1 bis 3,
**dadurch gekennzeichnet, dass**
die elektrischen Widerstände der temperaturabhängigen Widerstandssensoren (50, 60; 210, 220) gleich sind.

5. Mehrleitermessvorrichtung nach einem der Ansprüche 1 bis 3,

**dadurch gekennzeichnet, dass**
die elektrischen Widerstände der temperaturabhängigen Widerstandssensoren (50, 60; 210, 220) in einem vorbestimmten Verhältnis zueinander stehen.

6.  Mehrleitermessvorrichtung nach einem der vorstehenden Ansprüche,
    **dadurch gekennzeichnet, dass**
    die temperaturabhängigen Widerstandssensoren (50, 60; 210, 220) Platin-Sensoren sind.

## Claims

1.  A multiwire measuring device (10; 150) for detecting a defective temperature-dependent resistance sensor, comprising
    three terminals (1, 2, 3; 151, 154, 155) which are connected to two alternately controllable current generation means (70, 80; 250, 260) each of which provides a predetermined current, and to at least two voltage measuring means (110, 120; 270, 290, 300);
    at least two series-connected temperature-dependent resistance sensors (50, 60; 210, 220) which are thermally coupled and arranged in a housing, wherein one of the temperature-dependent resistance sensors (50; 210) has three terminals (51, 52, 53; 211, 213, 214) and the other temperature-dependent resistance sensor (60; 220) has two terminals (61, 62);
    wherein two of the three terminals (1, 2; 151, 155)) are connectable to the one temperature-dependent resistance sensor (50; 210) via a respective connecting line (20, 30; 160, 200) and the third terminal (3; 154) is connectable to the other temperature-dependent resistance sensor (60; 220) via a further connecting line (40; 190); and comprising an evaluation and control, device (130; 310) which is adapted two control the two current generation means (70, 80; 250, 260), and which is further adapted to determine, from the predetermined currents and the voltages measurable by the voltages measuring means (110, 120; 270, 290, 300), the electrical resistances (RPT100, RPT1000) of the at least two resistance sensors (50, 60; 210, 220) by a respective two-wire measurement or by a respective three-wire measurement, and to detect a defective temperature-dependent resistance sensor in dependence of the determined electrical resistances.

2.  A multiwire measuring device (150) for detecting a defective temperature-dependent resistance sensor, comprising four terminals (151, 152, 154, 155) which are connected in a predetermined manner with two alternately controllable current generation means (250, 260), each of which provides a predetermined current, and to two voltage measuring means (290, 300);
    at least two series-connected temperature-dependent resistance sensors (210, 220) which are thermally coupled and arranged in a housing, wherein one (210) of the temperature-dependent resistance sensors has four terminals (211, 212, 213, 214) and the other temperature-dependent resistance sensor (220) has two terminals; wherein three of the four terminals (151, 152, 155) are connectable to the one temperature-dependent resistance sensor (210) via a respective connecting line (160, 170, 200), and the fourth terminal (154) is connectable to the other temperature-dependent resistance sensor (220) via a further connecting line (190); and comprising an evaluation and control device (310) which is adapted to control the two current generation means (250, 260), and which is further adapted to determine, from the predetermined currents and the voltages measurable by the voltages measuring means (290, 300), the electrical resistance of the one temperature-dependent resistance sensor (210) by a four-wire measurement, and the electrical resistance of the other temperature-dependent resistance sensor (220) by a two-wire measurement, and to detect a defective temperature-dependent resistance
    sensor on the basis of the determined electrical resistances; or
    to determine, from the predetermined currents and the voltages measurable by the voltages measuring means (290, 300) the electrical resistances of the temperature-dependent resistance sensors (210, 220) by a respective three-wire measurement, and to detect a defective temperature-dependent resistance sensor in dependence of the determined electrical resistances.

3.  A multiwire measuring device (150) for detecting a defective temperature-dependent resistance sensor, comprising five terminals (151 - 155) which are connected in a predetermined manner to two alternately controllable current generation means (250, 260) each of which provides a predetermined current, and to at least two voltage measuring means (280, 290);
    at least two series-connected temperature-dependent resistance sensors (210, 220) which are thermally coupled and arranged in a housing, wherein one (210) of the temperature-dependent resistance sensors has four terminals (211, 212, 213, 214) and the other temperature-dependent resistance sensor (220) has two terminals, wherein three of the five terminals (151, 152, 155) are connectable to the one temperature-dependent resistance sensor (210) via a respective connecting line (160, 170, 200) and the other two terminals (153, 154) are connectable to a terminal of the other temperature-dependent resistance sensor (220) via a respective further connecting line (180, 190); and comprising

an evaluation and control device (310) which is adapted to control the two current generation means (250, 260), and which is further adapted to determine, from the predetermined currents and the voltages measurable by the voltages measuring means (280, 290), the electrical resistances of the temperature-dependent resistance sensors (210, 220) by a respective four-wire measurement, and to detect a defective temperature-dependent resistance sensor in dependence of the determined electrical resistances.

4.  The multiwire measuring device according to any of claims 1 to 3, **characterized in that** the electrical resistances of the temperature-dependent resistance sensors (50, 60; 210, 220) are identical.

5.  The multiwire measuring device according to any of claims 1 to 3, **characterized in that** the electrical resistances of the temperature-dependent resistance sensors (50, 60; 210, 220) are defined with a predetermined ratio to each other.

6.  The multiwire measuring device according to any of the preceding claims, **characterized in that** the temperature-dependent resistance sensors (50, 60; 210, 220) are platinum sensors.

**Revendications**

1.  Dispositif de mesure à plusieurs fils (10 ; 150) destiné à détecter un capteur de résistance défectueux thermosensible, comprenant :

    trois bornes de raccordement (1, 2, 3 ; 151, 154, 155), qui sont reliées à deux dispositifs de production de courant (70, 80 ; 250, 260) pouvant être commandés en alternance, lesquels fournissent chacun un courant prédéfini, et à au moins deux dispositifs de mesure de tension (110, 120 ; 270, 290, 300),
    au moins deux capteurs de résistance (50, 60 ; 210, 220) thermosensibles montés en série, lesquels sont couplés thermiquement et sont agencés dans un boîtier, l'un des capteurs de résistance thermosensibles (50 ; 210) comprenant trois raccordements (51, 52, 53 ; 211, 213, 214) et l'autre capteur de résistance thermosensible (60 ; 220) comprenant deux raccordements (61, 62),
    deux des trois bornes de raccordement (1, 2 ; 151, 155) pouvant être reliées par respectivement une ligne de raccordement (20, 30 ; 160, 200) à l'un des capteurs de résistance thermosensibles (50 ; 210) et la troisième borne de raccordement (3 ; 154) pouvant être reliée par une autre ligne de raccordement (40 ; 190) à l'autre capteur de résistance thermosensible (60 ; 220),
    et comprenant un dispositif d'évaluation et de commande (130 ; 310), lequel, est conçu pour commander les deux dispositifs de production de courant (70, 80 ; 240, 250), et lequel est conçu en outre pour déterminer à partir des courants prédéfinis et des tensions pouvant être mesurées par les dispositifs de mesure de tension (110, 120 ; 270, 290, 300) les résistances électriques (RPT100, RPT1000) des au moins deux capteurs de résistance (50, 60 ; 210, 220) respectivement au moyen d'une mesure à deux fils ou respectivement au moyen d'une mesure à trois fils et pour détecter en fonction des résistances électriques déterminées un capteur de résistance thermosensible défectueux.

2.  Dispositif de mesure à plusieurs fils (150) destiné à détecter un capteur de résistance thermosensible défectueux comprenant :

    quatre bornes de raccordement (151, 152, 154, 155), qui sont reliées d'une manière prédéfinie à deux dispositifs de production de courant (250, 260) pouvant être commandés en alternance, qui fournissent chacun un courant prédéfini, et à deux dispositifs de mesure de tension (290, 300),
    au moins deux capteurs de résistance thermosensibles (210, 220) montés en série, lesquels sont couplés thermiquement et sont agencés dans un boîtier, l'un des capteurs de résistance thermosensibles (210) comprenant quatre raccordements (211, 212, 213, 214) et l'autre capteur de résistance thermosensible (220) comprenant deux raccordements,
    trois des quatre bornes de raccordement (151, 152, 155) pouvant être reliées par respectivement une ligne de raccordement (160, 170, 200) à l'un des capteurs de résistance thermosensibles (210) et la quatrième borne de raccordement (154) pouvant être reliée par une autre ligne de raccordement (190) à l'autre capteur de résistance thermosensible (220),

et comprenant un dispositif d'évaluation et de commande (310), lequel est conçu pour commander les deux dispositifs de production de courant (240, 250), et lequel est conçu en outre pour déterminer à partir des courants prédéfinis et des tensions pouvant être mesurées par les dispositifs de mesure de tension (290, 300) la résistance électrique de l'un des capteurs de résistance thermosensibles (210) au moyen d'une mesure à quatre fils et la résistance électrique de l'autre capteur de résistance thermosensible (220) au moyen d'une mesure à deux fils et pour détecter en fonction des résistances électriques déterminées un capteur de résistance thermosensible défectueux, ou

pour déterminer à partir des courants prédéfinis et des tensions pouvant être mesurées par les dispositifs de mesure de tension (290, 300) les résistances électriques des capteurs de résistance thermosensibles (210, 220) respectivement au moyen d'une mesure à trois fils et pour détecter en fonction des résistances électriques déterminées un capteur de résistance thermosensible défectueux.

3. Dispositif de mesure à plusieurs fils (150) destiné à détecter un capteur de résistance thermosensible défectueux comprenant :

cinq bornes de raccordement (151 à 155), qui sont reliées d'une manière prédéfinie à deux dispositifs de production de courant (250, 260) pouvant être commandés en alternance, qui fournissent chacun un courant prédéfini, et à deux dispositifs de mesure de tension (280, 290),

au moins deux capteurs de résistance (210, 220) thermosensibles montés en série, lesquels sont couplés thermiquement et sont agencés dans un boîtier, l'un des capteurs de résistance thermosensibles (210) comprenant quatre raccordements (211, 212, 213, 214) et l'autre capteur de résistance thermosensible (220) comprenant deux raccordements,

trois des cinq bornes de raccordement (151, 152, 155) pouvant être reliées par respectivement une ligne de raccordement (160, 170, 200) à l'un des capteurs de résistance thermosensibles (210) et les deux autres bornes de raccordement (153, 154) pouvant être reliées respectivement par une autre ligne de raccordement (180, 190) à un raccordement de l'autre capteur de résistance thermosensible (220),

et comprenant un dispositif d'évaluation et de commande (310), lequel est conçu pour commander les deux dispositifs de production de courant (250, 260), et lequel est conçu en outre pour déterminer à partir des courants prédéfinis et des tensions pouvant être mesurées par les dispositifs de mesure de tension (280, 290) les résistances électriques des capteurs de résistance thermosensibles (210, 220) respectivement au moyen d'une mesure à quatre fils et pour détecter en fonction des résistances électriques déterminées un capteur de résistance thermosensible défectueux.

4. Dispositif de mesure à plusieurs fils selon l'une quelconque des revendications 1 à 3, **caractérisé en ce que** :

les résistances électriques des capteurs de résistance thermosensibles (50, 60 ; 210, 220) sont identiques.

5. Dispositif de mesure à plusieurs fils selon l'une quelconque des revendications 1 à 3, **caractérisé en ce que**:

les résistances électriques des capteurs de résistance thermosensibles (50, 60; 210, 220) se trouvent dans un rapport prédéfini les unes par rapport aux autres.

6. Dispositif de mesure à plusieurs fils selon l'une quelconque des revendications précédentes, **caractérisé en ce que**:

les capteurs de résistance thermosensibles (50, 60 ; 210, 220) sont des capteurs en platine.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202004021438 U1
- DE 102005029045 A1
- WO 9905480 A1
- DE 3022942 A1